(19) Europäisches Patentamt / European Patent Office / Office européen des brevets

(11) **EP 2 073 913 B1**

(12) **FASCICULE DE BREVET EUROPEEN**

(45) Date de publication et mention de la délivrance du brevet:
**11.05.2011 Bulletin 2011/19**

(21) Numéro de dépôt: **07823757.5**

(22) Date de dépôt: **31.08.2007**

(51) Int Cl.:
**B01D 53/04** *(2006.01)*    **B01J 20/28** *(2006.01)*

(86) Numéro de dépôt international:
**PCT/FR2007/051860**

(87) Numéro de publication internationale:
**WO 2008/037904 (03.04.2008 Gazette 2008/14)**

(54) **PROCÉDÉ PSA À LIT D'ADSORPTION COMPOSITE FORMÉ D'UN ADSORBANT ET D'AGGLOMÉRATS DE MCP**

PSA-VERFAHREN UNTER VERWENDUNG EINES VERBUNDSTOFFADSORPTIONSBETTES MIT EINEM ADSORPTIONSMITTEL UND PCM-AGGLOMERATEN

PSA METHOD USING A COMPOSITE ADSORPTION BED COMPRISING AN ADSORBENT AND PCM AGGLOMERATES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **25.09.2006 FR 0653928**

(43) Date de publication de la demande:
**01.07.2009 Bulletin 2009/27**

(73) Titulaire: **L'AIR LIQUIDE, Société Anonyme pour l'Etude et l'Exploitation des Procédés Georges Claude**
**75007 Paris (FR)**

(72) Inventeurs:
• **GUERET, Vincent**
  **F-75014 Paris (FR)**
• **MONEREAU, Christian**
  **F-75011 Paris (FR)**
• **PULLUMBI, Pluton**
  **F-78000 Versailles (FR)**

(74) Mandataire: **Conan, Philippe Claude**
**L'Air Liquide SA,**
**75 Quai d'Orsay**
**75321 Paris Cedex 07 (FR)**

(56) Documents cités:
EP-A- 1 536 128      WO-A-2004/030452
WO-A-2005/005022    DE-A1-102004 022 798
FR-A1- 2 847 586      US-A- 4 971 605
US-A- 5 861 050

EP 2 073 913 B1

**Description**

L'invention concerne un procédé thermo-cyclique à temps de cycle court, typiquement un temps de cycle inférieur à 30 minutes, notamment un procédé d'adsorption à pression modulée de type PSA (Pressure Swing Adsorption), utilisant des agglomérats contenant des matériaux à changement de phase (MCP), de manière à diminuer les effets thermiques que subit ledit procédé thermo cyclique à chaque cycle.

On appelle « procédé thermo-cyclique », tout procédé cyclique au cours duquel certaines étapes sont exothermiques, c'est-à-dire s'accompagnant d'un dégagement de chaleur, alors que certaines autres étapes sont endothermiques, c'est-à-dire s'accompagnant d'une consommation de chaleur.

Des exemples typiques de procédés thermo-cycliques selon la présente invention incluent:

- les procédés de séparation de gaz par adsorption modulée en pression, comme le procédé PSA (Pressure Swing Adsorption), le VSA procédé (Vacuum Swing Adsorption), le VPSA procédé (Vacuum Pressure Swing Adsorption) et le procédé MPSA (Mixed Pressure Swing Adsorption),
- tout procédé mettant en oeuvre une conversion chimique couplée à des cycles d'adsorption modulée en pression, tels que mentionnés ci-dessus, permettant de déplacer l'équilibre des réactions chimiques.

Les procédés de séparation par adsorption modulée en pression reposent sur le phénomène d'adsorption physique et permettent de séparer ou de purifier des gaz par cyclage en pression du gaz à traiter à travers un ou plusieurs lit d'adsorbant, tel un lit de zéolite, de charbon actif, d'alumine activée, de gel de silice, de tamis moléculaire ou analogues.

Dans le cadre de la présente invention, on désigne, sauf stipulation autre, par les termes « procédé PSA », tout procédé de séparation de gaz par adsorption modulée en pression, mettant en oeuvre une variation cyclique de la pression entre une pression haute, dite pression d'adsorption, et une pression basse, dite pression de régénération. Par conséquent, l'appellation générique procédé PSA est employée indifféremment pour désigner les procédés cycliques suivants:

- les procédés VSA dans lesquels l'adsorption s'effectue sensiblement à la pression atmosphérique, dite « pression haute », c'est-à-dire entre 1 bara et 1,6 bara (bara = bar absolu), préférentiellement entre 1,1 et 1,5 bara, et la pression de désorption, dite « pression basse », est inférieure à la pression atmosphérique, typiquement entre 30 et 800 mbara, de préférence entre 100 et 600 mbara.
- les procédés VPSA ou MPSA dans lesquels l'adsorption s'effectue à une pression haute sensiblement supérieure à la pression atmosphérique, généralement entre 1,6 et 8 bara, préférentiellement entre 2 et 6 bara, et la pression basse est inférieure à la pression atmosphérique, typiquement entre 30 et 800 mbara, de préférence entre 100 et 600 mbara.
- les procédés PSA dans lesquels l'adsorption s'effectue à une pression haute nettement supérieure à la pression atmosphérique, typiquement entre 1,6 et 50 bara, préférentiellement entre 2 et 35 bara, et la pression basse est supérieure ou sensiblement égale à la pression atmosphérique, donc entre 1 et 9 bara, de préférence entre 1,2 et 2,5 bara.

On parlera par la suite de « procédé RPSA » pour désigner des procédés PSA de cycle très rapide, en général inférieur à la minute.

De manière générale, un procédé PSA permet de séparer une ou plusieurs molécules de gaz d'un mélange gazeux les contenant, en exploitant la différence d'affinité d'un adsorbant donné ou, le cas échéant, de plusieurs adsorbants pour ces différentes molécules de gaz.

L'affinité d'un adsorbant pour une molécule gazeuse dépend de la structure et de la composition de l'adsorbant, ainsi que des propriétés de la molécule, notamment sa taille, sa structure électronique et ses moments multipolaires.

Un adsorbant peut être par exemple une zéolite, un charbon actif, une alumine activée, un gel de silice, un tamis moléculaire carboné ou non, une structure métallo-organique, un ou des oxydes ou des hydroxydes de métaux alcalins ou alcalino-terreux, ou une structure poreuse contenant une substance capable de réagir réversiblement avec une ou plusieurs molécules de gaz, telle que amines, solvants physiques, complexants métalliques, oxydes ou hydroxydes métalliques par exemple

L'adsorption est un phénomène exothermique, chaque couple molécule-adsorbant étant caractérisé par une enthalpie iso stérique d'adsorption ou une enthalpie de réaction en général. Symétriquement, la désorption est endothermique.

Par ailleurs, un procédé PSA est un procédé cyclique comprenant plusieurs étapes séquentielles d'adsorption et de désorption.

Par conséquent, certaines étapes du cycle d'un PSA sont exothermiques, notamment l'étape d'adsorption des molécules de gaz adsorbées sur l'adsorbant, alors que d'autres étapes sont endothermiques, notamment l'étape de régénération ou désorption des molécules adsorbées sur l'adsorbant.

Les effets thermiques qui résultent de l'enthalpie d'adsorption ou de l'enthalpie de réaction conduisent, d'une manière générale, à la propagation, à chaque cycle, d'une onde de chaleur à l'adsorption limitant les capacités d'adsorption et d'une onde de froid à la désorption limitant la désorption.

Ce phénomène cyclique local de battements en température a un impact non négligeable sur les performances de séparation du procédé, telles que la productivité, le rendement de séparation et l'énergie spécifique de séparation, comme le rappelle le document EP-A-1188470.

Ainsi, il a été montré que si les battements thermiques dus à l'enthalpie d'adsorption étaient totalement éradiqués, la productivité de certains PSA $O_2$ industriels actuels serait améliorée de l'ordre de 50% et le rendement en oxygène serait amélioré de 10%. De même pour les autres types de PSA, l'atténuation des battements thermiques entraînerait une amélioration notable des performances de séparation.

Ce phénomène négatif ayant été identifié, plusieurs solutions ont déjà été décrites pour tenter de le diminuer ou de le supprimer.

Ainsi, il a été proposé d'augmenter la capacité calorifique du milieu adsorbant par addition de liant inerte, lors de la fabrication des particules, par dépôt du milieu adsorbant sur un noyau inerte, par adjonction de particules identiques à l'adsorbant mais inertes. Par exemple, dans le cas d'un procédé PSA $O_2$, il a déjà été testé de réaliser l'adsorption de l'azote contenu dans l'air sur un lit composite constitué de zéolites 5A et 3A ne se différentiant que par la taille de leurs pores : seuls ceux de la zéolite 5A permettent l'adsorption d'azote, puisque ceux de la zéolite 3A sont de dimension trop faible.

Par ailleurs, il a été également décrit l'utilisation de moyens extérieurs de chauffage et/ou de refroidissement pour contre-balancer les effets thermiques de la désorption ou de l'adsorption, tels que l'utilisation d'échangeurs thermiques.

Des couplages thermiques entre phase d'adsorption et phase de régénération ont également été proposés, l'adsorbant étant disposé dans les passages successifs d'un échangeur à plaques, la circulation des fluides étant alors organisée de telle sorte que les passages soient alternativement en phase d'adsorption et de désorption.

Une autre solution permettant de diminuer l'amplitude des battements thermiques consiste à ajouter dans le lit d'adsorbant un matériau à changement de phase (MCP), comme décrit par les documents US-A-4,971,605 et FR2847586. De cette manière, la chaleur d'adsorption et de désorption, ou une partie de cette chaleur, est absorbée sous forme de chaleur latente par le MCP, à la température, ou dans le domaine de températures, du changement de phase du MCP. Il est possible alors d'opérer l'unité PSA dans un mode plus proche de l'isotherme.

En pratique, les matériaux à changement de phase (MCP) agissent comme des puits thermiques à leur température de changement de phase, ou sur leur domaine de températures de changement de phase compris entre une température inférieure et une température supérieure de changement de phase.

Les MCP peuvent être organiques, tels que les paraffines, les acides gras, les composés azotés, les composés oxygénés (alcool ou acides), les phényles et les silicones, ou inorganiques, tels que les sels hydratés et les alliages métalliques. On appellera MCP l'un de ces composés à l'état pur ou tout mélange contenant l'un de ces composés (comme par exemple les eutectiques).

La capacité d'absorption de chaleur d'un MCP est d'autant plus grande que sa chaleur latente est élevée. Généralement, les MCP sont exploités pour leur changement de phase solide-liquide.

Pour pouvoir manipuler les MCP, qu'ils soient à l'état solide ou liquide, ils peuvent être micro encapsulés dans une coquille solide micronique, préférentiellement à base de polymères (mélamine formaldéhyde, acrylique...).

Les paraffines en particulier étant relativement faciles à micro encapsuler, elles sont généralement des MCP de choix par rapport aux sels hydratés, même si les paraffines ont une chaleur latente généralement inférieure à celles des sels hydratés.

De plus, les paraffines présentent d'autres avantages comme la réversibilité du changement de phase, la stabilité chimique, la température définie de changement de phase ou les températures inférieures et supérieures définies de changement de phase (c'est-à-dire qu'il n'y a pas d'effet d'hystérésis), un faible coût, la toxicité limitée et le large choix de températures de changement de phase selon le nombre d'atomes de carbone et la structure de la molécule.

Les MCP paraffiniques micro encapsulées se présentent sous la forme d'une poudre, chaque microcapsule constituant cette poudre faisant entre 50 nm et 100 $\mu$m de diamètre, préférentiellement entre 0,2 et 50 $\mu$m de diamètre. Chaque microcapsule a une conductivité thermique de l'ordre de 0,1 à 0,2 W/m/K, selon que la paraffine est à l'état solide ou liquide à l'intérieur de la microcapsule.

Les MCP micro encapsulés, disponibles sous forme de poudre, ne peuvent pas être introduits tels quels dans un lit d'adsorbant car ils seraient entraînés par les flux de gaz circulant dans l'adsorbeur

Le document EP-A-1565539 décrit différentes manières de placer ces micro capsules à proximité immédiate de l'adsorbant, à savoir un des matériaux à côté, à la surface ou à l'intérieur de l'autre, afin qu'ils puissent jouer leur rôle de stockage/ déstockage des flux de chaleur liés respectivement à l'adsorption et à la désorption.

Toutefois, les solutions décrites dans ce document ne sont pas ou alors que difficilement applicables au plan industriel.

Un problème qui se pose alors est de pouvoir utiliser des MCP micro encapsulés dans un procédé PSA industriel de séparation de gaz par adsorption, en particulier dans un procédé PSA à temps de cycle court, c'est-à-dire inférieur ou égal à 30 minutes.

Autrement dit, la présente invention vise à proposer une solution industrielle pour mettre en oeuvre efficacement des particules d'adsorbant du commerce et des micro capsules de MCP, dans une unité de production cyclique de gaz de type PSA.

La présente invention est alors un procédé PSA de séparation et/ou de purification par adsorption d'un mélange gazeux à plusieurs constituants mettant en oeuvre un ou plusieurs adsorbeurs contenant chacun au moins un lit de particules d'adsorbant pour adsorber au moins l'un des constituants dudit mélange gazeux sur lesdites particules d'adsorbant, chaque adsorbeur étant soumis à des cycles d'adsorption/désorption comprenant des étapes d'adsorption et de désorption, ledit au moins un lit d'adsorbant contenu dans chaque adsorbeur comprend, en outre, des particules d'au moins un matériau à changement de phase (MCP), lesdites particules de MCP se présentent sous forme d'agglomérats de plusieurs micro-capsules de MCP, lesdits agglomérats étant mélangés aux particules d'adsorbants de manière à former un lit composite comprenant lesdits particules d'adsorbant et lesdits agglomérats de MCP micro-encapsulés caractérisé en ce que :

- la densité des agglomérats de MCP est différente de la densité dudit au moins un adsorbant avec lesquels ils sont mélangés dans le lit composite, et
- le rapport des densités des agglomérats de MCP et des particules d'adsorbants (Rdensité) dans le lit composite est tel que :

$$\text{Rdensité} \leq 5.5 - (2 . \text{Rdiamètre})$$

où :

- Rdensité est le rapport des densités des agglomérats de MCP et des particules d'adsorbant
- Rdiamètre est le rapport des diamètres équivalents des agglomérats de MCP et des particules d'adsorbant et
- les numérateurs et dénominateurs desdits rapports Rdensité et Rdiamètre étant choisis pour avoir : 1 <Rdensité ≤ 3,5 et 1,0 ≤ Rdiamètre ≤ 2,25.

Dans le cadre de l'invention, par « agglomérat », on entend un solide de dimension supérieure à 0,5 mm fabriqué selon l'une des techniques habituelles connues d'agglomération de poudre et pouvant revêtir différentes formes, en particulier une forme de bille, d'extrudé, de pastille, de concassé obtenu par concassage et tamisage de blocs de dimensions supérieures, ou de plaquette obtenue par découpage de feuilles préalablement compactées, ou autres.

En outre, les termes « densité », « diamètre », « Rdensité » et « Rdiamètre » sont définis par la suite dans la description.

Selon le cas, le procédé de l'invention peut comprendre l'une ou plusieurs des caractéristiques suivantes :

- le rapport Rdensité est tel que : Rdensité ≤ 5 - (2 . Rdiamètre), les numérateurs et dénominateurs desdits rapport Rdensité et Rdiamètre étant choisis pour avoir : 1 < Rdensité ≤ 3,0 et 1,0 ≤ Rdiamètre ≤ 2,0.
- les agglomérats de MCP ont une densité comprise entre 400 et 1200 kg/m$^3$, de préférence entre 500-900 kg/m$^3$, de préférence entre 500 et 600 kg/m$^3$.
- les agglomérats de MCP ont un diamètre compris entre 0,5 et 3 mm, de préférence un diamètre compris entre 1 et 1.5 mm ou compris entre 2 et 3 mm.
- la quantité d'agglomérats de MCP introduite dans un adsorbeur n'est pas homogène sur la totalité du volume dudit adsorbeur, comme expliqué plus loin dans la description.
- le MCP contenu dans les agglomérats de MCP est choisi parmi les paraffines, les acides gras, les composés azotés, les composés oxygénés (alcool ou acides), les phényles et les sels hydratés ou un mélange de ces composés.
- les agglomérats de MCP comportent un liant représentant moins de 30% en volume des agglomérats de MCP, de préférence le liant est choisi parmi des argiles, des liants hydrauliques (ciments), des polymères, des colles, des résines, éventuellement additionnés de fibres de carbone ou de métal.
- les agglomérats de MCP ont une conductivité thermique supérieure à 0,3 W/m/K.
- les agglomérats de MCP une conductivité thermique supérieure à 0,5 W/m/K, de préférence supérieure à 0,8 W/m/K.
- l'agglomérat de MCP comprend ou est formé de MCP micro encapsulés métallisés.
- la métallisation superficielle est continue ou discontinue, et/ou est réalisée sur plusieurs microcapsules de MCP.

- le matériau conducteur de chaleur déposé est un métal choisi parmi Cu, Ag, Fe, Ni, Pd, Al, Au, ou un alliage incorporant au moins un de ces métaux.
- le procédé est choisi parmi les procédés PSA $H_2$, PSA $O_2$, PSA $N_2$ et PSA $CO_2$ et/ou on produit un gaz riche en $H_2$, $O_2$, $N_2$, CO, $CO_2$ ou leurs mélanges, de préférence un gaz contenant au moins 50% en volume de $H_2$, $O_2$, $N_2$, CO, $CO_2$ ou leurs mélanges.
- on met en oeuvre plusieurs lits d'adsorption successifs dont l'un au moins est un lit composite formé d'agglomérats de MCP mélangés aux particules d'adsorbants.
- le gaz à traiter circuler radialement ou axialement dans l'adsorbeur contenant le lit composite.
- chaque cycle d'adsorption/désorption ayant un temps de cycle inférieur à 30 minutes.

La présente invention va être mieux comprise grâce à la description suivante faite en références aux figures annexées.

Dans le cadre de la présente invention, on réalise donc des agglomérats de PCM de forme, de diamètre et de densité tels qu'un mélange de particules d'adsorbant et desdits agglomérats reste homogène dans l'espace et dans le temps au cours du fonctionnement de l'unité PSA.

Or, il est connu que les mélanges de particules de caractéristiques différentes constituent des états métastables susceptibles d'évoluer de façon complexe lorsque le milieu est soumis à des champs de force, en particulier à des vibrations ou des chocs.

Les lits d'adsorbants d'une unité PSA sont soumis à des flux gazeux dont l'intensité et le sens varient d'une étape à l'autre. Ils sont également soumis aux phases transitoires que constituent les ouvertures et fermeture de vannes.

Généralement, au moins un des flux entrant ou sortant d'une unité d'adsorption est issu ou alimente une unité de compression - compresseur ou pompe à vide - qui transmet au fluide des vibrations de fréquence et d'intensité variées. Ces phénomènes créent des mouvements d'ensemble ou des mouvements locaux des particules qui doivent être pris en compte lors du dimensionnement de la géométrie de l'adsorbeur.

On citera par exemple l'utilisation d'une garde d'adsorbant pour compenser le tassement, la détermination des sections minimales pour éviter l'attrition des particules, l'emploi de toiles métalliques pour éviter le mélange d'adsorbants de caractéristiques différentes, ou encore l'utilisation de couches de billes céramiques pour faire appui sur le lit situé en dessous et éviter ainsi les mouvements dus à la circulation du gaz.

L'évolution dans le temps d'un mélange de particules de caractéristiques différentes dépend d'un nombre important de paramètres, à savoir non seulement de la densité et de la forme ou granulométrie, mais aussi notamment de l'état de surface, l'élasticité, la présence de gaz interstitiel, l'humidité... , l'amplitude et la fréquence des vibrations appliquées au milieu...

De ce fait, la prédiction de l'évolution d'un mélange constitué de particules de caractéristiques différentes est, dans la majorité des cas, très difficile, voire impossible à prévoir.

Il s'ensuit qu'actuellement, les précautions prises lors du dimensionnement d'une unité mettant en oeuvre des adsorbants sont généralement le résultat d'essais empiriques.

Ainsi, le rapport des diamètres de deux couches successives de billes support est au plus d'un facteur 2, par exemple 3/4"-3/8" (soit 18 - 9 mm environ) ou 1/2"-1/4"-1/8" (soit 12 - 6 - 3 mm environ). Le positionnement de ces couches peut aller de la plus grosse granulométrie à la plus petite ou inversement.

Par exemple, un adsorbant de diamètre 1.5 mm, utilisé pour arrêter l'humidité, peut être placé directement sur des billes support de 3 mm. On peut en déduire qu'il est possible dans les conditions de fonctionnement typique d'une unité de séchage par adsorption de placer un adsorbant de densité de l'ordre de 650 à 800 kg/m$^3$ au-dessus d'un lit de billes support de densité de l'ordre de 1 450 kg/m$^3$ en respectant le facteur 2 sur les diamètres respectifs.

Toutefois, aucune information n'est disponible dans l'art antérieur sur la stabilité inverse, c'est à dire de billes support de densité plus élevée que la couche d'adsorbants sur laquelle elle serait placée, ni sur l'évolution possible au cours du temps de mélanges de populations de particules présentant des caractéristiques différentes.

On sait par ailleurs que les fabricants d'adsorbants tamisent leur production afin de proposer des produits utilisables industriellement A partir d'échantillons, on peut mesurer la taille unitaire des particules et s'apercevoir qu'en prenant des groupes extrêmes, à savoir les particules les plus petites et les particules les plus grosses, contenant au moins 5% de la population, l'écart sur les diamètres par rapport au diamètre moyen est en général de l'ordre de 10%. Ces particules étant sphériques et de même composition sont bien sûr de même densité.

Il est apparu aux inventeurs de la présente invention qu'en se basant sur ces informations, devoir réaliser des agglomérats de PCM de densité approximativement égale à celle des particules d'adsorbant avec lesquelles on veut les utiliser en mélange et de dimension très proche, à savoir + ou - 10% de différence maximale en diamètre, était difficile car très contraignant et surtout beaucoup trop onéreux au plan industriel car chaque fabrication devrait être spécifique non seulement à un PSA donné mais aussi pour un même PSA, spécifique à chaque couche d'adsorbant car il s'agit généralement de procédé multi-lits, c'est-à-dire mettant en oeuvre plusieurs lits superposés ou juxtaposés successivement traversés par le gaz.

Les inventeurs de la présente invention ont donc entrepris une série d'essais mettant en oeuvre des adsorbants et des particules variées, en particulier de densités différentes compte tenu de l'absence d'information disponible à ce sujet, pour obtenir les informations nécessaires à la détermination des caractéristiques que doivent présenter les agglomérats de MCP pour être mélangés aux adsorbants utilisés dans les différents procédés de type PSA, c'est-à-dire pour que le mélange initial demeure homogène dans le temps et dans l'espace.

La démarche a consisté d'abord à déterminer le mode de vibration (fréquence, amplitude) à appliquer au mélange de particules d'adsorbant et de PCM pour être représentatif du fonctionnement des procédés industriels.

Ce point est prépondérant car l'évolution du système dépend de ces paramètres. Pour un même mélange initial, il est reconnu qu'en fonction de la nature des vibrations, on peut obtenir :

- des zones (fréquence/amplitude) où l'équilibre est stable dans le temps, c'est à dire que le mélange métastable demeure dans son état initial, et
- des zones où les grosses particules remontent vers la surface. Cet effet est connu sous le nom de « Brazil Nut Effect » (effet de la noix du Brésil), et
- des zones où les grosses particules s'enfoncent dans le lit. Cet effet est appelé « Reverse Brazil Nut Effect » (effet inverse de la noix du Brésil).

Toutes les manipulations mentionnées ci-dessous ont été effectuées en utilisant une tamiseuse de laboratoire de marque Fritsch et des récipients transparents parallélépipédiques de longueur 120 mm, de largeur 80 mm et de hauteur 80 mm.

La recherche du réglage de la tamiseuse d'une manière représentative du réglage effectué dans les unités industrielles a consisté à :

- reproduire visuellement à la surface libre du lit de particules, l'état d'un lit d'adsorbant dans les conditions de dimensionnement, c'est-à-dire à la vitesse maximum de circulation du gaz admissible sans produire d'attrition, et
- vérifier qu'avec ce réglage, les lits d'adsorbants de nature différente directement superposés industriellement (c'est à dire sans toile de séparation) étaient effectivement stables et qu'inversement les systèmes nécessitant par expérience une toile de séparation conduisaient à un mélange des particules sous l'effet des vibrations lorsque les deux couches étaient juste superposées sans toile de séparation.

La recherche du diamètre minimum d'un adsorbeur et donc de la vitesse maximale admissible est un des points importants dans le dimensionnement des unités d'épuration par adsorption compte tenu de son impact sur l'investissement. Le calage des formules empiriques faisant intervenir le poids du lit d'adsorbant et la perte de charge provoquée par la circulation d'un gaz à travers le lit a été réalisé précédemment par les inventeurs à partir d'essais mettant en oeuvre différents adsorbants et différentes conditions de circulation du gaz.

Il est apparu, lors de ces essais, que l'approche de la vitesse maximale à partir de laquelle les particules se déplacent et se choquent en générant de la poussière (attrition) se traduit par une mise en vibration d'un certain nombre de particules à la surface libre horizontale du lit sans qu'il n'y ait de déplacement des particules. On admet généralement qu'on est à la vitesse limite quand 5% environ des particules en surface sont sujettes à ces vibrations. Les particules des couches inférieures demeurent immobiles à part éventuellement en des points très limités et localisés à la paroi.

Pour définir les paramètres opérationnels de la tamiseuse et les valider comme susmentionné, on a utilisé d'abord les adsorbants puis les différents couples de lits correspondant à différents procédés d'épuration ou de production de gaz.

En particulier pour les épurations en tête de procédés cryogéniques de séparation d'air ou de syngas, on a utilisé différentes zéolites, puis des superpositions directes de lits d'adsorbants, c'est à dire sans toile de séparation, de type alumine activée surmontée de zéolite.

Les zéolites utilisées sont des zéolites 13X commercialisées par les sociétés CECA, UOP et ZEOCHEM, de diamètre compris entre 1.5 et 3.3 mm, tandis que les alumines activées proviennent des sociétés Engelhard, Porocel, UOP, Axens, et Alcan, et correspondent à des granulométries de 1.8 à 6 mm environ.

Les séries de test réalisés ont conduit à adopter un régime de vibrations permanent, une fréquence de vibrations de 50 Hz et une amplitude 0.15 à 0.5 mm environ en fonction de l'adsorbant placé en partie supérieure.

Pour des particules de 2 à 3 mm de diamètre et des densités de l'ordre de 600 kg/m$^3$, l'amplitude retenue a été de l'ordre de 0.3 mm. Elle a été diminuée pour les particules les plus petites et augmenté pour les particules les plus grosses, le critère étant, pour la fréquence permanente de 50Hz, d'obtenir l'état décrit précédemment (vibrations localisées sans déplacement de particules) pour la couche supérieure.

Les essais suivants ont consisté à trouver les caractéristiques de particules différentes constituant un mélange restant homogène lorsqu'on soumet ces particules aux vibrations ainsi définies. On notera qu'il existe a priori d'autres combinaisons de fréquences et amplitudes permettant de réaliser ce type d'étude. Le mode retenu correspond à une des possibilités de l'appareillage utilisé permettant de faire des réglages fins.

En plus des adsorbants utilisés directement dans les procédés d'épuration ou séparation de gaz par adsorption qui ont été cités plus haut, ont été utilisées des billes de verre calibrées de granulométrie allant de 1.5 à 10 mm et des billes métalliques de quelques millimètres de diamètre.

La majorité des essais a consisté à étudier des systèmes mettant en oeuvre deux types de particules A et B de caractéristiques différentes. Par la suite, on ne va retenir que les deux paramètres prépondérants, à savoir le diamètre équivalent et la densité, bien qu'il ait été observé de petites différences de comportement suivant l'état de surface en particulier.

De là, dans le cadre de la présente invention, on appelle « diamètre », le diamètre équivalent de la particule. Le « diamètre équivalent » d'une particule est celui de la sphère ayant la même surface spécifique, la surface spécifique étant la surface rapportée au volume de la particule considérée.

Ainsi, pour un bâtonnet de diamètre d et de longueur I, on obtient un diamètre équivalent De tel que :

$$De = 6 \cdot I \cdot d / (2 \cdot d + 4 \cdot I)$$

Pour une pastille telle que d = I, le diamètre équivalent est le diamètre de la particule.

De façon générale, pour la majorité des géométries de particules utilisées de type cylindrique, on trouve un diamètre équivalent compris entre 0.75 et 1.3 fois le diamètre du cylindre.

Pour une bille sphérique, le diamètre équivalent est directement le diamètre de la bille.

Pour une population de billes essentiellement sphériques mais dont les diamètres présentent une dispersion inhérente au procédé industriel de fabrication, on retient une définition classique : le diamètre équivalent d'une population de billes est le diamètre de billes identiques qui pour le même volume de lit donneraient la même surface totale. En effet, dès lors qu'on a déterminé la distribution en diamètre (c'est-à-dire qu'on a déterminé les différentes fractions Xi de diamètre Di, avec de préférence i supérieur ou égal à 5 pour obtenir une précision suffisante, par exemple par tamisage ou à partir d'appareils de traitement d'images), on obtient le diamètre équivalent par la formule :

$$1 / De = \sum_i \ (Xi / Di)$$

Pour les adsorbants concassés, forme sous laquelle on peut en particulier trouver certains charbons actifs, on assimile les particules à des sphères dont on détermine la distribution en diamètre par tamisage, puis on applique la formule de calcul précédente.

En outre, dans le cadre de l'invention, par « densité », on entend densité du lit de particules. Cette densité peut varier de quelques % suivant la méthode de remplissage. De façon générale, dans les essais selon l'invention, la densité de la couche inférieure correspond à un remplissage dense car les récipients transparents ont été vibrés à la suite du remplissage avec le premier type de particules afin de rendre horizontale la surface libre, alors que le dépôt de la deuxième couche de particule était effectué par l'intermédiaire d'un entonnoir dont l'extrémité était juste au-dessus du niveau de la couche déjà en place. De cette façon, le remplissage initial de cette seconde couche est de type « en vrac » mais les vibrations provoquées par la tamiseuse lors de sa mise en service conduisent à un remplissage dense.

Lors du remplissage des unités industrielles, on réalise généralement un remplissage de type dense, obtenu en laissant tomber les particules d'adsorbants d'une hauteur suffisante sur un déflecteur afin de générer une « pluie ».

Pour ces raisons et comme l'obtention de la densité tassée (remplissage dense) est mieux définie puisque c'est la densité maximum que l'on peut obtenir, et surtout plus reproductible que la densité de vrac, c'est à la densité tassée que l'on se référera dans le Tableau et les formules donnés ci-dessous, et on la désignera simplement par le terme « densité » dans la présente description.

Cette densité est obtenue en remplissant lentement de particules une éprouvette graduée de sorte que chaque particule puisse en théorie trouver sa meilleure position. En pratique, on réalise une pluie de particules en utilisant en partie supérieure de l'éprouvette un tamis à grosse maille. Différentes techniques peuvent être utilisées donnant des résultats similaires. Toutes les mesures et tests ont été réalisés sur des adsorbants préalablement régénérés, c'est-à-dire en pratique avec un taux d'humidité adsorbé inférieur ou égal à 5%.

Plus spécifiquement, les essais ont consisté à déposer comme décrit plus haut une première couche de particules A sur une hauteur de 30 à 50 mm puis une seconde couche de particules B sur une hauteur à peu près équivalente, c'est-à-dire de 30 à 50 mm environ, de sorte à remplir approximativement le récipient.

Initialement, les essais ont été faits en inversant systématiquement les couches de particules.

Les observations ont porté sur les infiltrations à la paroi, en partie centrale du récipient pour éviter les effets de coin non représentatif d'un adsorbeur industriel ainsi que sur l'apparition ou non de billes de l'autre espèce en surface ou au fond.

L'observation au niveau de la paroi et à la surface supérieure de l'adsorbant peut se faire le récipient étant vibré, l'observation du fond se faisant quant à lui en soulevant précautionneusement le récipient. Les phénomènes de bord, à savoir l'inter-pénétration des couches au niveau de la paroi, ont été identifiés lors des essais comme « négligeables », « acceptables » ou « inacceptables », suivant que l'on observait pas ou peu de pénétration, c'est à dire limitée à l'équivalent de 2 ou 3 couches maximum de particules de l'autre espèce, ou une pénétration plus importante, évolutive avec atteinte du fond du récipient.

Même si le phénomène de pénétration à la paroi peut paraître acceptable au niveau d'un adsorbeur de plusieurs dizaines de décimètres de diamètre, voire généralement de plusieurs mètres, on a pu mettre en évidence que de place en place ce phénomène finissait par toucher une partie croissante du milieu particulaire causant des ségrégations qui seraient inacceptables dans les procédés PSA envisagés. Ce phénomène de mouvement à la paroi est d'ailleurs connu et réputé dans la littérature comme pouvant créer à la longue des mouvements de convection importants.

L'apparition de billes de l'autre espèce à la surface libre ou au fond du récipient a été bien entendu référencée comme « inacceptable ».

On a vérifié visuellement par la suite que, si soumises aux vibrations, les couches A et B puis B et A ne se mélangeaient pas, c'est à dire que les différents critères étaient acceptables dans les deux configurations, un mélange quelconque de particules A et B restait stable. Ce résultat a été obtenu par l'examen visuel des 6 surfaces observables.

Une autre observation importante a consisté à s'apercevoir que la dynamique du système pouvait être lente, en particulier les mouvements de descente ou remontée des particules à travers l'autre lit. Pour les cas intéressants, c'est à dire proches des limites d'équilibre recherchées, les récipients ont été maintenus plus d'une heure sur la tamiseuse, puis la couche supérieure délicatement déplacée à l'aide d'une raclette afin de s'assurer qu'aucune particule de la couche inférieure n'était sur le point d'apparaître à la surface libre.

Une dernière observation intéressante a été qu'avec nos sélections de particules et de mode vibratoire, les deux ayant été déterminés pour être représentatifs des unités industrielles, le système constitué par de petites particules lourdes sur de grosses particules légères était le système le plus critique lorsqu'on définissait les essais par le rapport des diamètres et des densités (rapports supérieurs à 1 par définition, c'est à dire rapport du plus grand diamètre au plus petit, rapport de la densité plus élevée à la moins élevée, quels que soient les différents cas pouvant se présenter).

Une trentaine de systèmes binaires de particules correspondant au régime critique - petites particules lourdes sur grosses particules légères- ont alors permis de définir une frontière entre configurations stables et configurations évolutives conduisant à une ségrégation de particules.

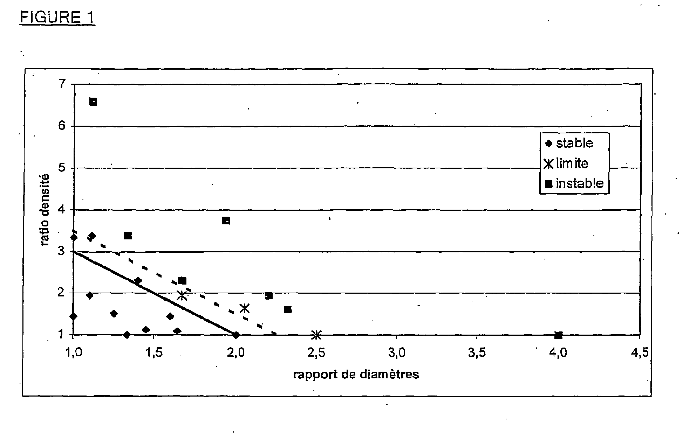

La Figure 1 ci-jointe présente les résultats obtenus avec en abscisses, le rapport des diamètres des particules (diamètre équivalent des particules de la couche inférieure / diamètre de celui des particules de la couche supérieure) et en ordonnées, le rapport des densités tassés des deux lits (densité du lit supérieur / densité du lit inférieur).

Sur la Figure 1, on voit qu'il existe une zone stable pour des rapports de densités différents, c'est-à-dire la zone située sous la droite représentée en pointillés (- - -), qui est bien plus vaste que celle décrite dans l'art antérieur pour les adsorbants utilisés en procédé PSA.

Par ailleurs, la droite représentée en traits pleins (-) correspond à une zone préférentielle excluant certains cas limites pouvant apparaître dans certains cycles et constitue dès lors un gage de sécurité permettant d'assurer un bon fonctionnement du procédé PSA, y compris durant les marches transitoires.

Le Tableau suivant donne les caractéristiques des différentes particules utilisées pour établir la Figure 1.

Tableau

| Matériau | Diamètre équivalent (mm) | Densité tassée (kg/m3) |
|---|---|---|
| Bille métallique | 4.5 | 5070 |
| Bille de verre | 1.5 | 1500 |
| Bille de verre | 2 | 1500 |
| Bille de verre | 3 | 1500 |
| Bille de verre | 4 | 1500 |
| Bille de verre | 5 | 1500 |
| Bille de verre | 6 | 1500 |
| Bille de verre | 10 | 1500 |
| Zéolite A | 1.25 | 650 |

(suite)

| Matériau | Diamètre équivalent (mm) | Densité tassée (kg/m3) |
|---|---|---|
| Zéolite B | 0.98 | 740 |
| Zéolite C | 1.6 | 680 |
| Zéolite D | 2.0 | 650 |
| Zéolite E | 2.5 | 650 |
| Alumine Activée A | 3.3 | 770 |
| Alumine Activée B | 5.0 | 770 |
| Charbon Actif A | 2 | 450 |
| Charbon Actif A | 2.9 | 400 |

D'après toutes les séries de tests effectuées, les mélanges de particules se situant dans la zone de stabilité ainsi déterminée resteront homogènes au cours du temps dans les applications PSA.

On constate que l'on peut réaliser des mélanges restant homogènes dans les conditions opératoires d'un PSA même en utilisant des particules de densité relativement différentes à partir du moment où le rapport des densités (Rdensité) reste inférieur à une valeur définie en fonction du rapport des diamètres équivalents (Rdiamètre).

En adoptant une relation simple, à savoir les courbes de la Figure 1, on peut montrer que le rapport des densités qui permet de se trouver en zone stable est fonction du rapport des diamètres, à savoir :

$$\text{Rdensité} \leq 5.5 - (2 . \text{Rdiamètre}) \qquad \text{(courbe en pointillés)}$$

et préférentiellement, de façon plus sécuritaire :

$$\text{Rdensité} \leq 5 - (2 . \text{Rdiamètre}) \qquad \text{(courbe en trait plein)}$$

On rappelle que, comme indiqué précédemment, Rdensité est le rapport de la densité du matériau le plus lourd à celle du plus léger, et Rdiamètre est le rapport du diamètre équivalent de la particule la plus grosse sur celui de la particule la plus petite.

Par exemple, dans le cas d'un adsorbant de diamètre de 3 mm et de densité de 400 kg/m$^3$ en mélange avec un aggloméré de 2 mm de diamètre et de 800 kg/m$^3$ de densité, Rdiamètre est le rapport du diamètre de l'adsorbant à celui de l'aggloméré (soit 3/2 = 1.5), alors que Rdensité est le rapport de la densité de l'aggloméré à celle de l'adsorbant (soit 800/400 = 2).

Cela signifie que si un adsorbant a comme caractéristique un diamètre de 2 mm et une densité de 500 kg/m$^3$, l'aggloméré de PCM peut par exemple :

- pour un diamètre équivalent identique (Rdiamètre = 1) avoir une densité comprise entre environ 145 kg/m$^3$ et 1750 kg/m$^3$, préférentiellement avoir une densité comprise entre environ 170 kg/m$^3$ et 1500 kg/m$^3$,
- pour un diamètre équivalent de 1 mm ou 4 mm (Rdiamètre = 2), avoir au maximum une densité comprise entre environ 335 kg/m$^3$ et 750 kg/m$^3$.

La majorité des unités PSA industrielles utilisent des adsorbants de diamètres équivalent allant de 0.8 mm à 3.2 mm environ avec des densités allant d'environ 400 kg/m$^3$ pour les plus légers à environ 800 kg/m$^3$ pour les plus lourds, tel que alumine activée, zéolite échangée...

On voit qu'un aggloméré de PCM de 1.6 mm de diamètre et de densité en lit de 540 à 600 kg/m$^3$ peut constituer une particule très largement utilisable et donc qui peut être produite en série avec des coûts attractifs.

De façon plus précise, les PSA industriels de grande taille installés dans de larges complexes industriels utilisent généralement des adsorbants de diamètre équivalent allant de 1.6 à 3.3 mm avec des densités allant d'environ 400 kg/m$^3$ pour les plus légers à environ 800 kg/m$^3$ pour les plus lourds. On voit que pour toutes ces unités, un aggloméré de diamètre équivalent compris entre 2 et 3 mm avec une densité de 500 à 600 kg/m$^3$ convient.

Inversement, les PSA dits 'rapides' ou RPSA, tels les générateurs ou concentrateurs d'oxygène médical et les

PSA H$_2$ pour pile à combustible (fuel cell) utilisent généralement des adsorbants de diamètre plus petit, généralement compris entre 0.8 et 1.6 mm. De là, un aggloméré de 1 à 1.5 mm de diamètre équivalent avec une densité de 500 à 600 kg/m$^3$ couvre alors la majorité de ces procédés.

Le mélange entre particules d'adsorbants et aggloméré de PCM selon l'invention peut se faire par exemple lors de la mise en fûts ou en sac de l'adsorbant suivant le rapport retenu pour le procédé ou lors du remplissage de l'unité.

La première solution est préférentiellement retenue car plus aisée à mettre en oeuvre. Par expérience, le transport effectué dans des conditions normales ne constitue pas une étape plus critique pour le mélange adsorbant / PCM que le fonctionnement réel de l'unité ; il n'y a pas d'observation de ségrégation en fonction de la taille par exemple. Le remplissage des adsorbeurs sera adapté pour qu'il ne puisse pas provoquer en lui-même une ségrégation des différentes particules.

Il convient dans tous les cas que cet aggloméré puisse jouer le rôle de puits thermique comme expliqué précédemment.

Or, la conductivité thermique des MCP micro encapsulés, généralement de l'ordre de 0.2 W/m/K, peut être insuffisante pour procurer à un aggloméré de taille millimétrique constitué uniquement à partir de ces microcapsules une conductivité thermique compatible avec les cycles rapides de type PSA et encore plus de type RPSA.

Ce point a été vérifié en procédant à des essais de pastillage avec des MCP paraffiniques micro encapsulés dans des capsules de mélamine-formaldéhyde.

La poudre de MCP micro-encapsulés a été placée dans le compartiment d'une pastilleuse et différentes pressions ont été appliquées, à savoir des pressions de 2 à 1800 bar.

Les pastilles obtenues faisaient entre 4 et 7 mm d'épaisseur, l'épaisseur étant contrôlable par la quantité de poudre introduite dans le compartiment, et 2 cm de diamètre. Une majorité des pastilles obtenues étaient manipulables et pouvaient sous cette forme être introduites dans un adsorbeur. La densité des pastilles obtenues était comprise entre 500 et 1000 kg/m$^3$, alors que la densité de la poudre de microcapsule de MCP est d'environ 300 à 400 kg/m$^3$.

La conductivité thermique varie assez peu avec la pression de compactage et était comprise entre 0,1 et 0,3 W/m/K suivant les échantillons. De telles valeurs ne permettent pas d'utiliser ces agglomérés dans la majorité des PSA sachant que par exemple, pour des agglomérés de MCP sous forme de plaque plane de quelques mm d'épaisseur, la conductivité thermique doit être supérieure à 0,5 W/m/K pour obtenir un temps caractéristique de conductivité thermique compatible avec la majorité des procédés PSA.

Selon une amélioration de l'invention, la conductivité thermique de l'aggloméré de MCP est donc augmentée jusqu'à une valeur qui soit adaptée au temps de cycle du procédé PSA ou RPSA.

La conductivité thermique de l'aggloméré de MCP selon l'invention est mesurée à une température telle qu'à aucun moment au cours de ladite mesure le MCP ne soit en changement de phase. Généralement, un MCP change de phase dans une zone de températures comprise entre une température minimale et une température maximale de changement de phase.

Selon l'invention, la conductivité thermique de l'aggloméré de MCP est mesurée à une température supérieure à la température maximale de changement de phase, de préférence supérieure d'au moins 5°C à la température maximale de changement de phase et, de préférence, comprise entre 5 et 20°C au-dessus de la température maximale de changement de phase.

De cette manière, on s'assure de ne jamais rencontrer de changement de phase lors de la détermination de la conductivité thermique de l'aggloméré, puisque une des méthodes possibles pour déterminer la conductivité thermique de l'aggloméré implique d'apporter de l'énergie à l'aggloméré, selon par exemple le protocole « Hot Disk » (disque chaud) décrit dans Gustafsson SE et al., J Phys_D: Appl Phys 12, 1411 (1979) ou Gustafsson SE et al. J Phys D: Appl Phys 19, p.727 (1986) ou SE-A-461,797, US-A-5,044,767 ou Gustafsson SE. Rev. Sci. ; Instrum. 62, 797(1991).

La méthode du « disque chaud » est une méthode possible, mais la conductivité thermique de l'aggloméré de MCP peut être déterminée par toute autre méthode connue de l'état de l'art.

Il se peut que la géométrie de l'aggloméré tel qu'elle puisse se prêter directement à ce type de caractérisation, par exemple si l'aggloméré est sous forme de plaquettes, d'extrudés, de pastilles ou, au contraire, que sa géométrie ne permette pas de le caractériser directement.

Dans ce dernier cas, il est toujours possible de réaliser un échantillon de mêmes caractéristiques que l'aggloméré et dont la géométrie permet sa caractérisation, telle une réalisation par exemple d'extrudés ou de pastilles de formulation identique à celle de l'aggloméré.

Comme indiqué précédemment, l'aggloméré de MCP, fabriqué à partir de MCP micro encapsulés, doit donc être conçu de manière à avoir au final une conductivité thermique compatible avec le procédé PSA que l'on veut améliorer, en pratique égale ou supérieure à 0,5 W/m/K pour obtenir un temps caractéristique de conductivité thermique compatible avec la majorité des procédés PSA.

Une première solution pour augmenter la conductivité de l'aggloméré de MCP est de combiner le MCP avec un matériau conducteur. Selon cette méthode, le MCP micro encapsulé est mélangé avec des promoteurs à forte conductivité thermique (fibres, particules, bandes ou copeaux métalliques ou carbonés), de manière à former un composite à conductivité thermique améliorée. L'ensemble est ensuite par exemple pressé de manière à obtenir soit des plaques, soit des pastilles par exemple, ayant un temps caractéristique de conduction compatible avec les temps de cycle rapides d'un PSA, c'est-à-dire inférieurs à 30 minutes.

Des essais de compactage ont donc également été faits avec des MCP micro encapsulés mélangés à différentes autres poudres, comme des poudres de cuivre et d'argent, le but de l'adjonction étant d'augmenter la conductivité thermique des pastilles. Des conductivités comprises entre 0,5 et 0,7 W/m/K ont été mesurées sur ces pastilles composites.

D'une manière générale, il est possible d'ajouter à la poudre de MCP tout matériau pouvant jouer le rôle de liant ou de promoteur thermique, de manière à améliorer les propriétés mécaniques ou thermiques des pastilles.

Un autre moyen possible pour augmenter la conductivité de l'aggloméré de MCP consiste à procéder d'abord à la métallisation d'au moins une partie de la surface externe de la microcapsule du MCP micro encapsulé par dépôt sur ladite surface d'au moins un matériau conducteur de la chaleur, puis à agglomérer les MCP ainsi métallisés. La métallisation de MCP est décrite par exemple dans FR-A-247 4660. La métallisation peut être opérée simultanément sur plusieurs microcapsules de MCP.

De préférence, la microcapsule est au moins partiellement recouverte d'un métal choisi parmi Cu, Ag, Fe, Ni, Pd, Al, Au, ou un alliage incorporant au moins un de ces métaux.

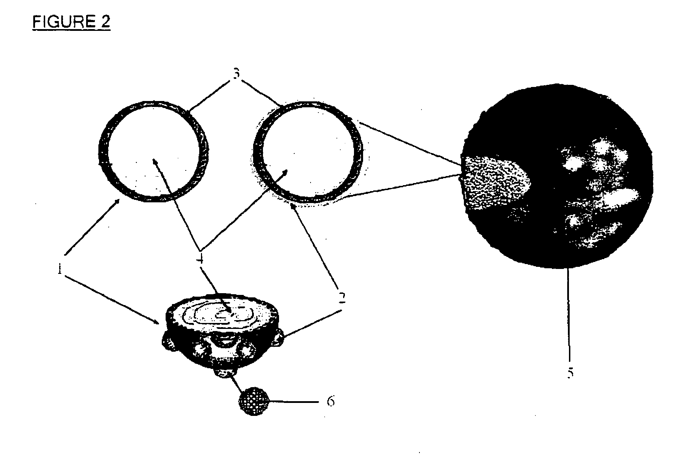

Pour augmenter la conductivité thermique de surface des microcapsules des MCP micro encapsulés 1, on opère, comme visible en Figure 2, une métallisation 2 de la surface, ou coquille, 3 de ces microsphères 1 contenant le MCP 4 de manière à former ensuite, par empilement et compactage de la poudre desdits MCP micro encapsulés 1 à conductivité thermique améliorée, un réseau continu 5 et très serré de matériau conducteur permettant une conduction efficace de la chaleur d'une microsphère à l'autre au sein de l'aggloméré.

La couche 2 de métallisation de matériau conducteur peut faire moins de 100 nm d'épaisseur et elle n'est pas nécessairement continue. Un dépôt discontinu de clusters 6 d'atomes métalliques sur la surface de la coquille est suffisant pour l'augmentation de la conductivité thermique de aggloméré de micro-capsules MCP. En effet, la conductivité thermique est une grandeur globale du matériau, et ne répond pas à des critères de seuil de percolation comme c'est le cas pour la conductivité électrique. Par exemple dans l'aggloméré de MCP selon l'invention, le diamètre des microcapsules de MCP est typiquement inférieur à 100 $\mu$m, préférentiellement inférieur à 50 $\mu$m, par conséquent si une partie de la surface de ces microcapsules, ou si un nombre restreint de ces microcapsules, n'est pas métallisée au sein de l'aggloméré, ces parties non métallisées n'opposeront qu'une résistance thermique très faible à la conduction thermique globale de l'aggloméré. On peut donc envisager de ne déposer qu'une couche discontinue de matériau conducteur à la surface des microsphères, en fonction de la conductivité voulue, et on contrôle ainsi la cinétique thermique tout en économisant la consommation en matériau conducteur.

Procéder de cette manière présente un certain nombre d'avantages, en particulier :

- on obtient une matrice de MCP conductrice tout en conservant les avantages de la micro encapsulation, à savoir facilité de manipulation, de mise en oeuvre, MCP confinés ;
- on crée, après compactage de la poudre, un aggloméré doté d'un réseau de conduction continu et très serré dont la maille est égale au diamètre des microsphères c'est à dire 50 nm à 50 $\mu$m, de préférence 1 à 10 $\mu$m ;
- le matériau conducteur est intégré au système de MCP ;
- on valorise la coque en lui donnant un rôle de conducteur thermique, et on optimise ainsi l'enthalpie volumique de changement de phase du système par rapport à un système où le conducteur thermique serait rajouté aux MCP micro encapsulés ;
- le degré de métallisation permet de contrôler la cinétique thermique du MCP et donc de l'adapter à une application donnée en fonction du temps de cycle, de la dimension caractéristique de l'aggloméré...

On améliore donc la conductivité thermique de la coque polymérique grâce à une métallisation contrôlée. La métallisation peut se faire par différentes techniques, à savoir par projection thermique, par projection de métaux en fusion, par voie chimique, ou par application d'une peinture contenant des particules de métal. Certaines techniques de métallisation (métallisation par voie chimique, auto catalytique, sous vide) peuvent nécessiter un traitement préalable du substrat, par ultrasons par exemple.

La réalisation de revêtements par projection thermique sur des substrats organiques est une voie possible pour incruster des particules à forte conductivité thermique dans la coque des particules de MCP. Pour cela, on peut entraîner des MCP micro encapsulés dans un flux de gaz chaud (~100°C) contenant de la poudre de métal par exemple. Le gaz chaud permet de faire fondre localement la surface de la coque, ce qui permet aux grains de métal de s'incruster dans le plastique. On forme ainsi une couche de matériaux conducteurs en surface et on récupère des MCP micro encapsulés métallisés. Cette méthode nécessite l'utilisation de moyens de refroidissement efficaces afin de limiter l'apport de chaleur important provenant du jet plasma et du matériau projeté.

Une voie très proche consiste à projeter sur les microcapsules de MCP des métaux en fusion. La projection métallique des microcapsules de PCM consiste à recouvrir la micro capsule froide par la projection à une vitesse suffisante de particules fondues. Les particules se solidifient sur la surface du substrat en prenant la forme d'une crêpe. Le revêtement est obtenu par la superposition d'une multitude de ces crêpes. Les matériaux projetables comprennent tous les types et tous les métaux ou alliages, les microcapsules plastiques de PCM existant sous forme de poudres. Ceci fait que la projection thermique est une technique extrêmement souple. Les matériaux projetés sont en fusion. La chaleur nécessaire à cette fusion peut être fournie par la combustion d'un mélange gazeux ou par un arc électrique. Les températures de flamme varient de 3000°C à 20000°C Cette température influence les propriétés des couches obtenues. La vitesse de projection est également un paramètre influençant les caractéristiques des dépôts. L'obtention d'un dépôt répondant à des attentes spécifiques implique que les particules atteignant la surface du substrat doivent se trouver à l'état liquide ou au moins pâteux, leur vitesse doit être suffisante pour qu'elles s'étalent convenablement sur le substrat et pour finir, il faut qu'une forte adhérence entre les particules et le substrat s'établisse.

Un procédé de métallisation par voie chimique usuellement utilisé consiste en une préparation de surface, suivie de la réduction d'un métal par catalyse avec un donneur d'électron présent dans la solution. Il dépend de trois phases essentielles : la rugosité contrôlée de la surface, l'activation engendrée, par exemple, par du palladium sous forme métallique, et le dégazage de l'hydrogène inhérent à la réaction chimique pendant la métallisation proprement dite.

Une nouvelle voie de traitement utilisant l'agitation spécifique apportée par des ultrasons de puissance a été développée récemment. Il s'agit de soumettre les échantillons à une vibration acoustique de forte amplitude, ce qui provoque l'implosion asymétrique de bulles de cavitation directement à la surface du substrat à revêtir. Ainsi, sans modifier ni la nature du procédé, ni la séquence réactionnelle, un effet bénéfique est observé sous certaines conditions. Plusieurs paramètres ont d'abord été étudiés, et leurs effets mesurés en termes de vitesse de dépôts, d'adhérence et de taux de contraintes internes. Il s'agit de la séquence réactionnelle (choix du moment et de la durée de l'irradiation ultrasonore), de la puissance et de la fréquence des ultrasons. L'apport des ultrasons pendant la phase d'activation permet une meilleure dissolution des agglomérats de palladium colloïdaux en palladium métal et augmente de ce fait la densité de sites de nucléation sous vibration de haute fréquence et de forte puissance. On note une amélioration, de l'ordre de 30%, de l'adhérence du revêtement sur le substrat et une prolongation notable de sa durée de vie lorsque l'on impose une irradiation ultrasonore de 5 watts au début du cuivrage. Un meilleur ancrage mécanique de la première couche métallique apparaît lorsque les ultrasons sont employés et on observe la diminution du taux de contraintes résiduelles du revêtement.

La métallisation « electroless » ou auto catalytique des matériaux isolants (polymères, verres, céramiques) est un autre procédé qui nécessite la mise en oeuvre de traitements de surface spécifiques visant à améliorer la réactivité de surface et l'aptitude des substrats à être revêtus, et ce, en vue d'améliorer la stabilité à long terme de l'interface métal / substrat. Dans le cadre de la présente invention, un accent particulier est porté sur le dépôt « electroless » de nickel ou de cuivre sur les micro capsules de MCP dont la coque est constituée de différents polymères techniques et sur le développement de nouveaux procédés conduisant, préalablement à la métallisation proprement dite, d'une part au greffage de fonctions azotées à la surface des substrats (via des traitements plasma RF en atmosphère $NH_3$ ou $N_2$) et d'autre part à la formation de sites catalytiques (via la chimisorption d'espèces palladiées par immersion des substrats fonctionnalisés dans une solution acide de $PdCl_2$).

Le dépôt de revêtements métalliques au moyen de techniques sous vide offre une alternative intéressante pour la métallisation des microcapsules de MCP. Ces techniques présentent l'avantage d'être assez simples, le pré traitement (traitement au plasma) et la déposition pouvant avoir lieu successivement dans une seule et même chambre sous vide. On évite ainsi une contamination des surfaces à recouvrir avant que la couche métallique ne soit déposée. En outre, grâce aux processus sous vide, il est possible de déposer de très fines couches (de l'ordre du nm), ce qui permet de réaliser une économie de matériaux considérable. Un autre point intéressant à trait au fait qu'outre des couches purement métalliques, des alliages (par ex. inox) peuvent également être déposés. Le dépôt réussi de couches de revêtement métalliques sur des matières plastiques à l'aide de techniques sous vide et la flexibilité du processus de déposition sous vide ouvrent de nouvelles perspectives pour la métallisation des MCP, où on recherche à contrôler précisément la couche déposée, d'autant plus qu'une couche continue n'est pas forcément nécessaire. Il existe deux types de dépôt par PVD (Physical Vapor Deposition) : l'évaporation et la pulvérisation cathodique. Ces deux procédés diffèrent par la manière de détacher les particules de la cible. La méthode PVD comporte de nombreux avantages. Parmi ceux-ci on peut citer la qualité constante des dépôts, l'automatisation facile du procédé, le respect de l'environnement.

Une méthode simple de métallisation consiste à disperser les MCP micro encapsulés dans une peinture contenant des particules de métal. Il existe commercialement des peintures contenant du cuivre (par ex. CuPro-Cote™), du nickel (Super Shield), de l'argent (Silver Lining Paint) ou d'autres matériaux conducteurs. Les MCP micro encapsulés sont dispersés dans une telle peinture sous agitation, puis l'excès de peinture est éliminé par filtrage sur milieu poreux (verre fritté par exemple), éventuellement sous vide. Les MCP métallisés ainsi obtenus sont mis à sécher sous vide et à une température permettant d'éliminer toute trace de solvant. L'épaisseur de la couche de peinture déposée peut être contrôlée par la vitesse d'agitation de la dispersion, la viscosité de la peinture, le temps de séjour dans la peinture, etc....

L'excès de peinture récupéré peut être réutilisé pour métalliser d'autres MCP micro encapsulés.

La combinaison des deux types de solution présentés ci-dessus, à savoir adjonction de liant avec un rôle mécanique et/ou thermique et métallisation au moins partielle des microcapsules de MCP peut être nécessaire à l'obtention d'agglomérats répondant aux critères physiques recherchés.

On comprend donc que l'on peut obtenir à partir de MCP peu coûteux car produit en grande quantité, des agglomérats de caractéristiques physiques directement mélangeables aux particules d'adsorbants et suffisamment conducteurs pour permettre d'améliorer la thermique des unités PSA.

Cela concerne donc la majorité des procédés de ce type et plus particulièrement de façon non limitative, outre les PSA $H_2$, $O_2$, $N_2$, CO et $CO_2$, les PSA de fractionnement du syngas en deux fractions au moins, les PSA sur gaz naturel destinés à retirer l'azote, et les PSA servant à fractionner des mélanges d'hydrocarbures.

La proportion de MCP agglomérés à ajouter à l'adsorbant peut varier selon le PSA considéré, par exemple plus importante (30%) dans une zone de forte adsorption et plus faible, voire nulle dans une zone où il s'agira d'adsorber des traces de constituants.

Un mélange homogène dans une couche donnée peut être souhaitable mais des hétérogénéités locales n'auront pas d'impact important sur le résultat global, du fait en particulier du mélange constant des veines de fluide dans un milieu particulier.

On notera qu'il n'est pas nécessaire d'avoir une répartition homogène du MCP sur tout le volume du lit d'adsorbant. Par exemple, pour un procédé PSA $O_2$, il est plus intéressant de placer les agglomérats de MCP plutôt dans la première moitié du lit de zéolite.

Plus généralement, dans un procédé PSA multi-lits, les agglomérats de MCP peuvent n'être introduits que dans un seul de ces lits, ou dans une partie seulement d'un de ces lits, ou dans certaines parties seulement de plusieurs de ces lits.

De plus, dans une zone donnée, la répartition de l'agglomérat de MCP n'est pas exactement homogène mais peut suivre un certain écart-type.

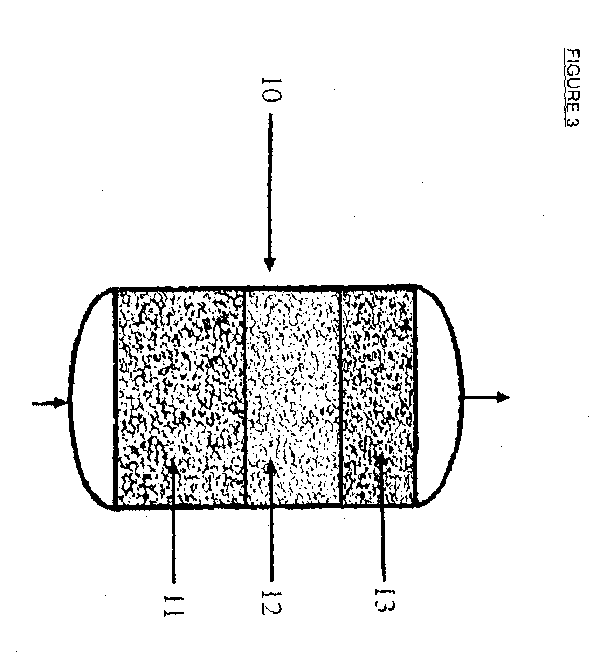

Sur la figure 3 est représenté un adsorbeur 10 d'une unité PSA comprenant plusieurs lits 11, 12 et 13 successifs d'adsorption.

Le premier lit 11 est un lit d'adsorption composite selon l'invention contenant des agglomérats de MCP mélangés à des particules d'adsorbant par exemple du charbon actif, de la zéolite, du gel de silice ou de l'alumine activée.

Le deuxième lit 12 est un lit d'adsorption composite selon l'invention contenant des agglomérats de MCP mélangés à des particules d'adsorbant par exemple du charbon actif, de la zéolite, du gel de silice ou de l'alumine activée. La proportion de MCP dans les lits 11 et 12 n'est pas la même.

Le troisième lit 13 est un lit d'adsorbant sans agglomérats de MCP.

Le gaz G traverse successivement le premier lit 11 puis le deuxième lit 12 puis le troisième lit 13 pendant l'étape d'adsorption.

Exemples

Les exemples suivants sont des exemples d'applications des lits composites à base de MCP dans des procédés PSA industriels

Dans ce qui suit, les termes « entrée » et « sortie » désignent les extrémités d'entrée et de sortie d'un adsorbeur pendant une étape d'adsorption et l'expression « co-courant » désigne le sens de circulation du gaz dans l'adsorbeur pendant cette étape d'adsorption alors que le terme « contre-courant » désigne le sens inverse de circulation du gaz

Exemple 1 : PSA $H_2$

Le procédé PSA $H_2$ permet de purifier l'hydrogène d'un mélange gazeux contenant, en plus de $H_2$, au moins une molécule parmi CO, $CO_2$, $CH_4$, $N_2$, $H_2O$ et des hydrocarbures.

Ce mélange gazeux peut par exemple provenir d'au moins une source parmi les sources suivantes : un réformeur à la vapeur ou auto thermal par exemple, un réacteur d'oxydation partielle, un réacteur de type Fischer-Tropsch, une ligne de gaz naturel, toute ligne d'un réseau de gaz d'une installation pétrochimique ou d'une raffinerie.

Une unité PSA $H_2$ contient usuellement plusieurs adsorbeurs, typiquement entre 3 et 25 adsorbeurs, comme montré dans les documents US-A-4834780 ou US-A-4475929, et peut produire de 5 $Nm^3$/h, par exemple pour alimenter une pile à combustible, tel que décrit par EP-A-1243048, à 300000 $Nm^3$/h de $H_2$.

Il existe dans l'état de la technique des PSA $H_2$ à vannes séquentielles et des PSA $H_2$ dits rotatifs.

Un cycle de PSA $H_2$ contient au moins une étape d'adsorption au cours de laquelle le mélange à traiter est introduit à co-courant dans au moins un adsorbeur à une pression haute comprise entre 5 et 40 bar abs, préférentiellement entre 10 et 35 bar abs. Au cours de cette étape, les molécules plus lourdes que l'hydrogène sont adsorbées et l'hydrogène purifié est soutiré en sortie d'adsorbeur.

Une autre étape au moins du cycle d'un PSA $H_2$ est l'étape d'équilibrage pendant laquelle deux adsorbeurs se trouvant à des pressions initiales différentes sont mis en communication afin que le gaz circule de l'adsorbeur à plus haute pression vers l'adsorbeur à plus basse pression.

Un des buts principaux d'un équilibrage est d'augmenter le rendement en $H_2$.

L'équilibrage peut être total, c'est-à-dire que les pressions sont sensiblement égales dans les deux adsorbeurs à la fin de l'étape, ou partiel, c'est-à-dire que les pressions sont sensiblement différentes dans les deux adsorbeurs à la fin de l'étape.

Une autre étape encore du cycle d'un PSA $H_2$ est l'étape de régénération pendant laquelle l'adsorbeur est décomprimé à contre-courant jusqu'à une pression basse de régénération.

Généralement, la pression de régénération d'un PSA $H_2$ est comprise entre 1 et 3 bar, mais il est possible, dans certains cas, que cette pression de régénération soit plus haute, typiquement comprise entre 3 et 9 bar, préférentiellement entre 5 et 7 bar.

L'étape de régénération, qui consiste à désorber et à évacuer une partie des molécules de gaz encore adsorbées, a pour but de rétablir la capacité d'adsorption des adsorbants.

Cette étape peut être partiellement ou totalement couplée avec un balayage d'un gaz d'élution introduit en sortie de l'adsorbeur et circulant à contre-courant.

Une autre étape encore du cycle PSA $H_2$ est l'étape de recompression, pendant laquelle la pression de l'adsorbeur est remontée jusqu'à sensiblement la pression haute, de manière à pouvoir ensuite procéder de nouveau à l'étape d'adsorption et engager ainsi le cycle suivant.

Une autre étape possible du cycle consiste à recycler une partie du gaz évacué lors d'une étape de régénération vers l'entrée du PSA $H_2$. Le but de ce recyclage est d'améliorer le rendement en $H_2$. Le temps de cycle d'un procédé PSA $H_2$ est compris entre 1 minute et 30 minutes, préférentiellement entre 5 minutes et 15 minutes.

Certaines unités de type RPSA en cours de développement pourront néanmoins avoir des temps de cycle inférieur à la minute et nécessiter des agglomérats à conductibilité thermique améliorée, par exemple un PSA $H_2$ associé à pile à combustible.

Exemple 2: PSA $O_2$

Le PSA $O_2$ permet de produire, en sortie d'adsorbeur, de l'oxygène à une pureté comprise entre 70 et 99% en volume, préférentiellement entre 80 et 95%, par adsorption sélective de l'azote présent dans l'air.

Simultanément, un PSA $O_2$ est capable également de produire de l'air enrichi en azote en entrée d'adsorbeur, lors des étapes de régénération. Les PSA $O_2$ sont utilisés par exemple :

- dans le milieu médical pour la production d'air respirable enrichi ou appauvri en oxygène, comme décrit par exemple dans WO-A-2003/090903, WO-A-2005/028059, US-A-5906672 ou US-A-6793719. Dans le cas de PSA $O_2$ médicaux délivrant de l'air enrichi en oxygène, les débits d'oxygène délivrés par unité sont typiquement compris entre 0,5 et 300 Nl/min. Certains de ces PSA peuvent être portables comme décrit par exemple dans WO-A-2003/064009, WO-A-2004/054493, EP-A-1307278 ou WO-A-02/09848.
- dans le domaine de l'aéronautique, comme PSA $O_2$ embarqués, pour délivrer de l'air enrichi en oxygène à bord d'un appareil en vol. Ces PSA sont souvent appelés OBOGS (On Board Oxygen Generator Systems). De tels systèmes sont décrits par exemple dans WO-A-02/04076, EP-A-1400275 ou EP-A-1374972.

Dans ces deux premières applications, il pourra s'agir de RPSA nécessitant également des agglomérats de MCP à conductibilité thermique améliorée.

- dans l'industrie, par exemple dans la métallurgie, l'industrie du verre, la pisciculture ou le traitement des eaux.

Une unité PSA $O_2$ contient usuellement plusieurs adsorbeurs, typiquement entre 1 et 3 adsorbeurs, et peut produire de 0,03 $Nm^3/h$ (par exemple les PSA $O_2$ médicaux) à 10000 $Nm^3/h$ d'$O_2$.

Les PSA $O_2$ fonctionnent généralement à l'aide de vannes séquentielles. Cependant, pour les PSA $O_2$ de petite taille (typiquement par exemple les PSA $O_2$ médicaux), des technologies de PSA $O_2$ rotatifs ont également été développées, comme décrit par exemple dans EP-A-1.235.630, WO-A-9828013, WO9901202, EP -A-1.355.717, US-A-6,488,747, US-A-6,311,719 ou WO-A-05025722. Un cycle de PSA $O_2$ contient au moins une étape d'adsorption au cours de laquelle l'air, qui peut être pré-traité pour éliminer différentes impuretés éventuelles ($H_2O$, $CO_2$, hydrocarbures, ...), est introduit à co-courant dans au moins un adsorbeur à une pression haute comprise entre 1 bar abs et 8 bar abs, préférentiellement entre 1,1 bar abs et 6 bar abs. Au cours de cette étape, l'azote est préférentiellement adsorbé et un gaz enrichi en oxygène est soutiré en sortie d'adsorbeur. Une autre étape possible du cycle d'un PSA $O_2$ est l'étape d'équilibrage pendant laquelle deux adsorbeurs se trouvant à des pressions initiales différentes sont mis en communication afin que le gaz circule de l'adsorbeur à plus haute pression vers l'adsorbeur à plus basse pression. Un des buts principaux d'un équilibrage est d'augmenter le rendement en $O_2$. L'équilibrage peut être total (c'est-à-dire que les pressions sont sensiblement égales dans les deux adsorbeurs à la fin de l'étape) ou partiel (c'est-à-dire que les pressions sont sensiblement différentes dans les deux adsorbeurs à la fin de l'étape). Une autre étape encore du cycle d'un PSA $O_2$ est l'étape de régénération pendant laquelle l'adsorbeur est décomprimé à contre-courant jusqu'à une pression basse de régénération. Généralement, la pression de régénération d'un PSA $O_2$ est comprise entre 200 mbar et 1,5 bar, selon la pression haute d'adsorption. L'étape de régénération, qui consiste à désorber et à évacuer une partie des molécules d'azote encore adsorbées, a pour but de rétablir la capacité d'adsorption d'azote des adsorbants. Cette étape peut être partiellement ou totalement couplée avec un balayage d'un gaz d'élution riche en oxygène introduit en sortie de l'adsorbeur et circulant à contre-courant, de manière à abaisser encore la pression partielle en azote. Une autre étape encore du cycle PSA $O_2$ est l'étape de recompression, pendant laquelle la pression de l'adsorbeur est remontée jusqu'à sensiblement la pression haute, de manière à pouvoir ensuite procéder de nouveau à l'étape d'adsorption et engager ainsi le cycle suivant. La recompression peut être réalisée avec l'air d'alimentation ou avec un gaz riche en oxygène. Le temps de cycle d'un procédé PSA $O_2$ est compris entre 5 secondes et 5 minutes, préférentiellement entre 10 secondes et 2 minutes.

Exemple 3 : PSA $CO_2$

Le PSA $CO_2$ permet de produire un gaz décarbonaté d'une part et un gaz enrichi en $CO_2$ d'autre part à partir d'un gaz d'alimentation contenant du $CO_2$. Le gaz décarbonaté contient entre 0,1 et 15% de $CO_2$ résiduel, préférentiellement entre 1 et 8% de $CO_2$ résiduel. Le gaz enrichi en $CO_2$ contient entre 10 et 99% de $CO_2$ (JP-A-2003-001061), préférentiellement entre 50 et 96% de $CO_2$. Dans un procédé PSA $CO_2$, le $CO_2$ est adsorbé et récupéré lors de l'étape de régénération et le gaz décarbonaté, non adsorbé, est récupéré en sortie d'adsorbeur pendant l'étape d'adsorption. Il existe, dans l'état de l'art, des PSA $CO_2$ rotatifs (US-A-6,500,236) pour lesquels l'invention peut également être appliquée. Les PSA $CO_2$ peuvent être utilisés pour traiter des gaz contenant entre 400 ppm et 80% de $CO_2$, préférentiellement entre 5% et 50% de $CO_2$, et peuvent être appliqués par exemple dans l'industrie métallurgique, par exemple pour la décarbonatation de gaz issus de DRI, de Corex, de Midrex, de HYL, ou de haut-fourneaux (US-A-6,562,103, US-A-5,582,029, US-A-5,858,057, US-A-5,676,732), dans l'industrie du papier, dans l'industrie de la chaux, dans l'industrie cimentière, dans les centrales électriques (JP 2003-001061), dans les IGCC (EP-A-1142623, US-A-5,582,029), dans le traitement du gaz naturel ou du bio gaz naturel, ou pour décarbonater un milieu confiné, par exemple dans les sous-marins ou en plongée. Une unité PSA $CO_2$ contient usuellement plusieurs adsorbeurs, typiquement entre 1 et 15 adsorbeurs (JP-A-2000-354726). Un cycle de PSA $CO_2$ contient au moins une étape d'adsorption au cours de laquelle le flux gazeux contenant du $CO_2$, qui peut être pré-traité pour éliminer différentes impuretés éventuelles ($H_2O$, hydrocarbures, métaux, composés soufrés ou chlorés, poussières ...), est introduit à co-courant dans au moins un adsorbeur à une pression haute comprise entre 1 bar abs et 50 bar abs, préférentiellement entre 1,1 bara et 10 bara. Au cours de cette étape, le $CO_2$ est préférentiellement adsorbé et un gaz appauvri en $CO_2$ est soutiré en sortie d'adsorbeur. Une autre étape possible du cycle d'un PSA $CO_2$ est l'étape d'équilibrage pendant laquelle deux adsorbeurs se trouvant à des pressions initiales différentes sont mis en communication afin que le gaz circule de l'adsorbeur à plus haute pression vers l'adsorbeur à plus basse pression. Un des buts principaux d'un équilibrage est d'augmenter le rendement en gaz décarbonaté et d'améliorer la pureté du $CO_2$ récupéré pendant l'étape de régénération. L'équilibrage peut être total (c'est-à-dire que les pressions sont sensiblement égales dans les deux adsorbeurs à la fin de l'étape) ou partiel (c'est-à-dire que les pressions sont sensiblement différentes dans les deux adsorbeurs à la fin de l'étape). Une autre étape encore du cycle d'un PSA $CO_2$ est l'étape de régénération pendant laquelle l'adsorbeur est décomprimé à contre-courant jusqu'à une pression basse de régénération. Généralement, la pression de régénération d'un PSA $CO_2$ est comprise entre 50 mbara et 2 bara, selon la pression haute d'adsorption. L'étape de régénération, qui consiste à désorber une partie des molécules de $CO_2$ adsorbées précédemment, a pour but de rétablir la capacité d'adsorption de $CO_2$ des adsorbants et de produire un flux enrichi en $CO_2$. Cette étape peut être partiellement ou totalement couplée avec un balayage d'un gaz d'élution, moins riche en $CO_2$ que le gaz désorbé. Une autre étape encore du cycle PSA $CO_2$ est l'étape de recompression, pendant laquelle la pression de l'adsorbeur est remontée jusqu'à sensiblement la pression haute, de manière à pouvoir ensuite procéder de nouveau à l'étape d'adsorption et engager ainsi le cycle suivant. La recompression peut être réalisée avec le gaz d'alimentation ou avec un gaz produit au cours du cycle. Une autre étape possible du cycle consiste à recycler une partie du gaz enrichi en $CO_2$, obtenu lors d'une étape de régénération, vers le PSA $CO_2$. Le but de ce recyclage est d'améliorer le rendement en gaz décarbonaté et d'améliorer la pureté du $CO_2$ récupéré au cours de l'étape de régénération. Une autre possibilité pour améliorer globalement les performances de séparation d'une installation utilisant un PSA $CO_2$ consiste à coupler ce PSA $CO_2$ avec une deuxième unité de séparation, par exemple un autre PSA ou une unité de séparation par membranes ou une unité de séparation par cryogénie. Le temps de cycle d'un procédé PSA $CO_2$ est compris entre 1 minute et 30 minutes, préférentiellement entre 2 minutes et 20 minutes.

Exemple 4 : PSA N$_2$

Le PSA N$_2$ permet de produire de l'azote à une pureté comprise entre 70 et 99.9%, préférentiellement entre 80 et 98%, en adsorbant préférentiellement l'oxygène présent dans l'air. Les PSA N$_2$ utilisent généralement un tamis moléculaire carboné. Il existe aussi des PSA permettant de co-produire de l'oxygène et de l'azote : cf WO-A-2004054493 et WO-A-2003086586.

Exemple 5 : Autres applications

L'invention peut être mise en oeuvre, en outre, dans un procédé :

- PSA Argon tel que décrit notamment dans US-A-6,544,318, US-A-6,432,170, US-A-5,395,427 ou US-A-6,527,831. Le PSA Ar permet de produire de l'oxygène à une pureté supérieure à 93%, en adsorbant préférentiellement soit l'argon, soit l'oxygène, présent dans un flux riche en O$_2$ issu par exemple d'un PSA O$_2$. Les PSA Ar utilisent généralement un tamis moléculaire carboné ou une zéolite échangée à l'argent (US-A-6,432,170).
- PSA He qui permet de produire de l'hélium en adsorbant préférentiellement les autres molécules présentes dans le flux d'alimentation.
- tout PSA permettant la séparation entre un alcène et un alcane, typiquement les PSA éthylène/éthane ou propylène/ propane, par exemple. Ces séparations reposent sur une différence de cinétique d'adsorption des molécules sur un tamis moléculaire, carboné ou non.
- tout PSA permettant de fractionner un gaz de synthèse (syngas).
- tout PSA permettant de séparer CH$_4$ de N$_2$.
- SERP (Sorption Enhanced Reaction Process) couplant les réactions de vaporéformage du méthane avec la capture in situ du CO$_2$ par adsorption. Le principe du SERP est décrit dans plusieurs documents (US6,103,143, Hufton et al., « Sorption enhanced reaction process (SERP) for the production of hydrogen », 1998). La réaction globale du vaporéformage du méthane consiste à faire réagir le méthane avec de la vapeur d'eau, de manière à produire de l'hydrogène et du CO$_2$. En éliminant le CO$_2$ par adsorption au cours du vapo-réformage (sur un adsorbant, par exemple l'hydrotalcite), l'équilibre est déplacé vers la production de l'hydrogène et l'hydrogène est produit à une plus grande pureté. Les agglomérats de MCP peuvent être placés dans le lit d'adsorption du CO$_2$ du SERP de manière à diminuer les effets thermiques dus à l'adsorption et donc à adsorber de plus grandes quantités de CO$_2$.

**Revendications**

**1.** Procédé PSA de séparation et/ou de purification par adsorption d'un mélange gazeux à plusieurs constituants mettant en oeuvre un ou plusieurs adsorbeurs contenant chacun au moins un lit de particules d'adsorbant pour adsorber au moins l'un des constituants dudit mélange gazeux sur lesdites particules d'adsorbant, chaque adsorbeur étant soumis à des cycles d'adsorption/désorption comprenant des étapes d'adsorption et de désorption, ledit au moins un lit d'adsorbant contenu dans chaque adsorbeur comprend, en outre, des particules d'au moins un matériau à changement de phase (MCP), lesdites particules de MCP se présentent sous forme d'agglomérats de plusieurs micro-capsules de MCP, lesdits agglomérats étant mélangés aux particules d'adsorbants de manière à former un lit composite comprenant lesdits particules d'adsorbant et lesdits agglomérats de MCP micro-encapsulés **caractérisé en ce que** :

   - la densité des agglomérats de MCP est différente de la densité dudit au moins un adsorbant avec lesquels ils sont mélangés dans le lit composite, et
   - le rapport des densités des agglomérats de MCP et des particules d'adsorbants (Rdensité) dans le lit composite est tel que :

$$\text{Rdensité} \leq 5{,}5 - (2 \cdot \text{Rdiamètre})$$

où :

   - Rdensité est le rapport des densités des agglomérats de MCP et des particules d'adsorbant,
   - Rdiamètre est le rapport des diamètres équivalents des agglomérats de MCP et des particules d'adsorbant, et
   - les numérateurs et dénominateurs desdits rapports Rdensité et Rdiamètre étant choisis pour avoir :

$$1 < \text{Rdensité} \leq 3,5 \text{ et } 1,0 \leq \text{Rdiamètre} \leq 2,25.$$

2. Procédé selon la revendication 1, **caractérisé en ce que** le rapport des densités Rdensité est tel : Rdensité ≤ 5 - (2 . Rdiamètre), les numérateurs et dénominateurs desdits rapport Rdensité et Rdiamètre étant choisis pour avoir :

$$1 < \text{Rdensité} \leq 3,0 \text{ et } 1,0 \leq \text{Rdiamètre} \leq 2,0.$$

3. Procédé selon l'une des revendications 1 ou 2, **caractérisé en ce que** les agglomérats de MCP ont une densité comprise entre 400 et 1200 kg/m$^3$, de préférence entre 500 et 900 kg/m$^3$.

4. Procédé selon l'une des revendications 1 à 3, **caractérisé en ce que** les agglomérats de MCP ont une densité comprise entre 500 et 600 kg/m$^3$.

5. Procédé selon l'une des revendications 1 à 4, **caractérisé en ce que** les agglomérats de MCP ont un diamètre entre 0,5 et 3 mm, de préférence un diamètre compris entre 2 et 3 mm ou un diamètre compris entre 1 et 1.5 mm.

6. Procédé selon l'une des revendications 1 à 5, **caractérisé en ce que** le MCP contenu dans les agglomérats de MCP est choisi parmi les paraffines, les acides gras, les composés azotés, les composés oxygénés, les phényles et les sels hydratés ou un mélange de ces composés.

7. Procédé selon l'une des revendications 1 à 6, **caractérisé en ce que** les agglomérats de MCP comportent un liant représentant moins de 30% en volume des agglomérats de MCP, de préférence le liant est choisi parmi des argiles, des liants hydrauliques, des polymères, des colles, des résines, éventuellement additionnés de fibres de carbone ou de métal.

8. Procédé selon l'une des revendications 1 à 7, **caractérisé en ce que** les agglomérats de MCP ont une conductivité thermique supérieure à 0,3 W/m/K.

9. Procédé selon l'une des revendications 1 à 8, **caractérisé en ce que** les agglomérats de MCP une conductivité thermique supérieure à 0,5 W/m/K.

10. Procédé selon l'une des revendications 1 à 9, **caractérisé en ce que** l'agglomérat de MCP comprend ou est formé de MCP micro encapsulés métallisés.

11. Procédé selon la revendication 10, **caractérisé en ce que** la métallisation superficielle est continue ou discontinue, et/ou est réalisée sur plusieurs microcapsules de MCP.

12. Procédé selon l'une des revendications 10 ou 11, **caractérisé en ce que** le matériau conducteur de chaleur déposé est un métal choisi parmi Cu, Ag, Fe, Ni, Pd, Al, Au, ou un alliage incorporant au moins un de ces métaux.

13. Procédé selon l'une des revendications 1 à 12, **caractérisé en ce qu'**il est choisi parmi les procédés PSA H$_2$, PSA O$_2$, PSA N$_2$ et PSA CO$_2$ et/ou on produit un gaz riche en H$_2$, O$_2$, CO, N$_2$, CO$_2$ ou leurs mélanges, de préférence un gaz contenant au moins 50% en volume de H$_2$, O$_2$, CO, N$_2$, CO$_2$ ou leurs mélanges.

14. Procédé selon l'une des revendications 1 à 13, **caractérisé en ce qu'**il met en oeuvre plusieurs lits d'adsorption successifs dont l'un au moins est un lit composite formé d'agglomérats de MCP mélangés aux particules d'adsorbants.

15. Procédé selon l'une des revendications 1 à 14, **caractérisé en ce que** le gaz à traiter circuler radialement ou axialement dans l'adsorbeur contenant le lit composite.

16. Procédé selon l'une des revendications 1 à 15, **caractérisé en ce que** chaque cycle d'adsorption/désorption a un temps de cycle inférieur à 30 minutes.

**Claims**

1. PSA process for separating and/or purifying a gas mixture containing several constituents by adsorption, using one or more adsorbers that each contain at least one bed of adsorbent particles to adsorb at least one of the constituents of said gas mixture onto said adsorbent particles, each adsorber being subjected to adsorption/desorption cycles comprising steps of adsorption and of desorption, said at least one adsorbent bed contained in each adsorber comprises, in addition, particles of at least one phase change material (PCM), said PCM particles are in the form of agglomerates of several PCM microcapsules, said agglomerates being mixed with the adsorbent particles so as to form a composite bed comprising said adsorbent particles and said micro-encapsulated PCM agglomerates, **characterized in that**:

   - the density of the PCM agglomerates is different from the density of said at least one adsorbent with which they are mixed in the composite bed; and
   - the ratio of the densities of the PCM agglomerates and of the adsorbent particles (Rdensity) in the composite bed is such that:

$$\text{Rdensity} \leq 5.5 - (2 \cdot \text{Rdiameter})$$

   where:

   - Rdensity is the ratio of the densities of the PCM agglomerates and of the adsorbent particles;
   - Rdiameter is the ratio of the equivalent diameters of the PCM agglomerates and of the adsorbent particles; and
   - the numerators and denominators of said Rdensity and Rdiameter ratios being chosen in order to have:

$$1 < \text{Rdensity} \leq 3.5 \text{ and } 1.0 \leq \text{Rdiameter} \leq 2.25.$$

2. Process according to Claim 1, **characterized in that** the ratio of the densities Rdensity is such that: Rdensity ≤ 5 - (2 . Rdiameter), the numerators and denominators of said Rdensity and Rdiameter ratios being chosen in order to have:

$$1 < \text{Rdensity} \leq 3.0 \text{ and } 1.0 \leq \text{Rdiameter} \leq 2.0.$$

3. Process according to either of Claims 1 and 2, **characterized in that** the PCM agglomerates have a density between 400 and 1200 $kg/m^3$, preferably between 500 and 900 $kg/m^3$.

4. Process according to one of Claims 1 to 3, **characterized in that** the PCM agglomerates have a density between 500 and 600 $kg/m^3$.

5. Process according to one of Claims 1 to 4, **characterized in that** the PCM agglomerates have a diameter between 0.5 and 3 mm, preferably a diameter between 2 and 3 mm or a diameter between 1 and 1.5 mm.

6. Process according to one of Claims 1 to 5, **characterized in that** the PCM contained in the PCM agglomerates is chosen from paraffins, fatty acids, nitrogen-containing compounds, oxygen-containing compounds, phenyls and hydrated salts or a mixture of these compounds.

7. Process according to one of Claims 1 to 6, **characterized in that** the PCM agglomerates comprise a binder that represents less than 30% by volume of the PCM agglomerates, preferably the binder is chosen from clays, hydraulic binders, polymers, adhesives, resins, to which carbon or metal fibers are optionally added.

8. Process according to one of Claims 1 to 7, **characterized in that** the PCM agglomerates have a thermal conductivity greater than 0.3 W/(m.K).

9. Process according to one of Claims 1 to 8, **characterized in that** the PCM agglomerates have a thermal conductivity greater than 0.5 W/(m.K).

10. Process according to one of Claims 1 to 9, **characterized in that** the PCM agglomerate comprises or is formed from metallized micro-encapsulated PCMs.

11. Process according to Claim 10, **characterized in that** the surface metallization is continuous or discontinuous, and/or is carried out on several PCM microcapsules.

12. Process according to either of Claims 10 and 11, **characterized in that** the thermally conductive material deposited is a metal chosen from Cu, Ag, Fe, Ni, Pd, Al, Au, or an alloy incorporating at least one of these metals.

13. Process according to one of Claims 1 to 12, **characterized in that** it is chosen from $H_2$ PSA, $O_2$ PSA, $N_2$ PSA and $CO_2$ PSA processes and/or a gas rich in $H_2$, $O_2$, CO, $N_2$, $CO_2$ or mixtures thereof, preferably a gas containing at least 50% by volume of $H_2$, $O_2$, CO, $N_2$, $CO_2$ or mixtures thereof is produced.

14. Process according to one of Claims 1 to 13, **characterized in that** it uses several successive adsorption beds, at least one of which is a composite bed formed of PCM agglomerates mixed with the adsorbent particles.

15. Process according to one of Claims 1 to 14, **characterized in that** the gas to be treated flows radially or axially in the adsorber containing the composite bed.

16. Process according to one of Claims 1 to 15, **characterized in that** each adsorption/desorption cycle has a cycle time of less than 30 minutes.


**Patentansprüche**

1. PSA-Verfahren zur adsorptiven Trennung und/oder Reinigung eines Gasgemischs aus mehreren Bestandteilen unter Verwendung eines oder mehrerer Adsorber mit jeweils mindestens einer Schüttung von Adsorptionsmittelteilchen zum Adsorbieren mindestens eines der Bestandteile des Gasgemischs an den Adsorptionsmittelteilchen, wobei jeder Adsorber Adsorptions-/Desorptionszyklen mit Adsorptions- und Desorptionsschritten unterworfen wird, wobei die mindestens eine in jedem Adsorber enthaltene Adsorptionsmittelschüttung außerdem Teilchen aus mindestens einem Phasenwechselmaterial (PCM) umfaßt, wobei die PCM-Teilchen in Form von Agglomeraten mehrerer PCM-Mikrokapseln vorliegen, die Agglomerate mit den Adsorptionsmittelteilchen so gemischt sind, daß sich eine Verbundschüttung ergibt, die die Adsorptionsmittelteilchen und die mikroverkapselten PCM-Agglomerate umfaßt, **dadurch gekennzeichnet, daß**:

   - die Dichte der PCM-Agglomerate von der Dichte des mindestens einen Adsorptionsmittels, mit dem sie in der Verbundschüttung gemischt sind, verschieden ist und
   - das Verhältnis der Dichten der PCM- Agglomerate und der Adsorptionsmittelteilchen (RDichte) in der Verbundschüttung einen solchen Wert hat, daß:

   $$\text{RDichte} \leq 5,5 - (2 \, . \, \text{RDurchmesser})$$

   wobei:

   - RDichte für das Verhältnis der Dichten der PCM-Agglomerate und der Adsorptionsmittelteilchen steht,
   - RDurchmesser für das Verhältnis der Äquivalentdurchmesser der PCM-Agglomerate und der Adsorptionsmittelteilchen steht und
   - die Zähler und Nenner der Verhältnisse RDichte und RDurchmesser so gewählt sind, daß: $1 < \text{RDichte} \leq 3,5$ und $1,0 \leq \text{RDurchmesser} \leq 2,25$.

2. Verfahren nach Anspruch 1, **dadurch gekennzeichnet, daß** das Verhältnis der Dichten RDichte einen solchen Wert hat, daß: $\text{RDichte} \leq 5 - (2 \, . \, \text{RDurchmesser})$, wobei die Zähler und Nenner der Verhältnisse RDichte und RDurchmesser so gewählt sind, daß: $1 < \text{RDichte} \leq 3,0$ und $1,0 \leq \text{RDurchmesser} \leq 2,0$.

3. Verfahren nach Anspruch 1 oder 2, **dadurch gekennzeichnet, daß** die PCM-Agglomerate eine Dichte zwischen 400 und 1200 kg/m$^3$, vorzugsweise zwischen 500 und 900 kg/m$^3$, aufweisen.

4. Verfahren nach einem der Ansprüche 1 bis 3, **dadurch gekennzeichnet, daß** die PCM-Agglomerate eine Dichte zwischen 500 und 600 kg/m$^3$ aufweisen.

5. Verfahren nach einem der Ansprüche 1 bis 4, **dadurch gekennzeichnet, daß** die PCM-Agglomerate einen Durchmesser zwischen 0,5 und 3 mm, vorzugsweise einen Durchmesser zwischen 2 und 3 mm oder einen Durchmesser zwischen 1 und 1,5 mm, aufweisen.

6. Verfahren nach einem der Ansprüche 1 bis 5, **dadurch gekennzeichnet, daß** das in den PCM-Agglomeraten enthaltene PCM unter Paraffinen, Fettsäuren, Stickstoffverbindungen, Sauerstoffverbindungen, Phenylen und hydratisierten Salzen oder einer Mischung dieser Verbindungen ausgewählt ist.

7. Verfahren nach einem der Ansprüche 1 bis 6, **dadurch gekennzeichnet, daß** die PCM-Agglomerate ein Bindemittel enthalten, das weniger als 30 Vol.-% der PCM-Agglomerate ausmacht, wobei das Bindemittel vorzugsweise unter Tonen, hydraulischen Bindemitteln, Polymeren, Klebstoffen und Harzen, gegebenenfalls mit Zusatz von Kohle- oder Metallfasern, ausgewählt ist.

8. Verfahren nach einem der Ansprüche 1 bis 7, **dadurch gekennzeichnet, daß** die PCM-Agglomerate eine Wärmeleitfähigkeit von mehr als 0,3 W/m/K aufweisen.

9. Verfahren nach einem der Ansprüche 1 bis 8, **dadurch gekennzeichnet, daß** die PCM-Agglomerate eine Wärmeleitfähigkeit von mehr als 0,5 W/m/K aufweisen.

10. Verfahren nach einem der Ansprüche 1 bis 9, **dadurch gekennzeichnet, daß** das PCM-Agglomerat metallisierte mikroverkapselte PCM umfaßt oder daraus besteht.

11. Verfahren nach Anspruch 10, **dadurch gekennzeichnet, daß** die Oberflächenmetallisierung kontinuierlich oder diskontinuierlich ist und/oder auf mehreren PCM-Mikrokapseln ausgeführt ist.

12. Verfahren nach Anspruch 10 oder 11, **dadurch gekennzeichnet, daß** es sich bei dem abgeschiedenen wärmeleitenden Material um ein unter Cu, Ag, Fe, Ni, Pd, Al und Au ausgewähltes Metall oder eine Legierung, die mindestens eines dieser Metalle enthält, handelt.

13. Verfahren nach einem der Ansprüche 1 bis 12, **dadurch gekennzeichnet, daß** es unter H$_2$-PSA-Verfahren, O$_2$-PSA-Verfahren, N$_2$-PSA-Verfahren und CO$_2$-PSA-Verfahren ausgewählt wird und/oder ein an H$_2$, O$_2$, CO, N$_2$, CO$_2$ oder Gemischen davon reiches Gas, vorzugsweise ein Gas, das mindestens 50 Vol.-% H$_2$, O$_2$, CO, N$_2$, CO$_2$ oder Gemische davon enthält, hergestellt wird.

14. Verfahren nach einem der Ansprüche 1 bis 13, **dadurch gekennzeichnet, daß** dabei mehrere aufeinanderfolgende Adsorptionsmittelschüttungen, von denen mindestens eine eine Verbundschüttung aus PCM-Agglomeraten in Abmischung mit den Adsorptionsmittelteilchen ist, verwendet werden.

15. Verfahren nach einem der Ansprüche 1 bis 14, **dadurch gekennzeichnet, daß** das zu behandelnde Gas in dem die Verbundschüttung enthaltenden Adsorber radial oder axial strömt.

16. Verfahren nach einem der Ansprüche 1 bis 15, **dadurch gekennzeichnet, daß** jeder Adsorptions-/Desorptionszyklus eine Zykluszeit von weniger als 30 Minuten aufweist.

FIGURE 1

FIGURE 2

FIGURE 3

10

13

12

11

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1188470 A
- US 4971605 A
- FR 2847586
- EP 1565539 A
- SE 461797 A
- US 5044767 A
- FR 2474660 A
- US 4834780 A
- US 4475929 A
- EP 1243048 A
- WO 2003090903 A
- WO 2005028059 A
- US 5906672 A
- US 6793719 A
- WO 2003064009 A
- WO 2004054493 A
- EP 1307278 A
- WO 0209848 A
- WO 0204076 A
- EP 1400275 A
- EP 1374972 A
- EP 1235630 A
- WO 9828013 A
- WO 9901202 A
- EP 1355717 A
- US 6488747 A
- US 6311719 A
- WO 05025722 A
- JP 2003001061 A
- US 6500236 A
- US 6562103 A
- US 5582029 A
- US 5858057 A
- US 5676732 A
- EP 1142623 A
- JP 2000354726 A
- WO 2003086586 A
- US 6544318 A
- US 6432170 A
- US 5395427 A
- US 6527831 A
- US 6103143 A, Hufton

**Littérature non-brevet citée dans la description**

- **Gustafsson SE et al.** *J Phys_D: Appl Phys,* 1979, vol. 12, 1411
- **Gustafsson SE et al.** *J Phys D: Appl Phys,* 1986, vol. 19, 727
- **Gustafsson SE.** *Rev. Sci. ; Instrum.,* 1991, vol. 62, 797